# EUROPEAN PATENT APPLICATION

(11) **EP 2 093 686 A1**
(43) Date of publication of application: **26.08.2009**
(21) Application number: 09151007.3
(22) Date of filing: 21.01.2009
(51) Int. Cl.: G06F 21/00, G06F 9/46, H04L 29/06, H04L 12/22

(54) **Apparatus, method and computer program for sharing cryptographic data among different program execution environments in an image forming apparatus.**

(30) Priority: 21.02.2008 JP 2008040216
(71) Applicant: Ricoh Company, Ltd., Ohta-ku Tokyo 143-8555 (JP)
(72) Inventor: Furukawa, Hideaki, Tokyo (JP)
(74) Representative: Schwabe - Sandmair - Marx

(57) **Abstract**

An image forming apparatus capable of executing a program in plural program execution environments is disclosed. The disclosed image forming apparatus includes a storage unit (21) storing cryptographic data related to a cryptographic function; a first recording unit configured to obtain the cryptographic data from the storage unit and record the cryptographic data in a first storage area (22) that can be referenced from the plural program execution environments; and plural second recording units provided in the plural program execution environments and configured to obtain the cryptographic data from the first storage area and record the cryptographic data in a second storage area for each of the plural program execution environments so that the cryptographic data can be referenced by the program executed in the plural program execution environments.

## Description

### BACKGROUND OF THE INVENTION

### 1. Field of the Invention

The present invention generally relates to an image forming apparatus, a data processing method, and a computer readable recording medium, and more specifically, to an image forming apparatus, a data processing method, and a computer readable recording medium each having a cryptographic function.

### 2. Description of the Related Art

In recent years, there have been image forming apparatuses such as printers, copiers, and multifunction peripherals that are equipped with a Java (registered trademark) virtual machine (VM) and capable of executing programs distributed in the form of Java bytecode. However, one virtual machine has a limited usable memory area. Therefore, plural virtual machines are required to be formed in some cases to realize multi-functions of the recent image forming apparatuses. Moreover, execution of applications written in a conventional code, that is what is termed a native code, is also required to be guaranteed in some cases. In such an image forming apparatus, plural VM environments and a native environment are formed as program execution environments.

On the other hand, the recent image forming apparatuses have various functions that utilize networks. To ensure security of the functions and data transferred by the functions, the image forming apparatuses have started to be equipped with a cryptographic function such as encrypted communication (for example, Patent Document 1).

In the image forming apparatuses having the plural program execution environments (VM environment and Native environment) in these circumstances, it is preferable that a cryptographic function be uniform throughout the program execution environments.
[Patent Document 1] Japanese Patent Application Publication No. 2006-115379

However, the VM environment and the Native environment have been conventionally configured to independently manage data related to the cryptographic function. Therefore, there has been a problem in that it is difficult to achieve consistency of the cryptographic function among the program execution environments.

### SUMMARY OF THE INVENTION

In view of the aforementioned circumstances, it is an object of at least one embodiment of the present invention to provide an image forming apparatus, a data processing method, and a program that are capable of appropriately achieving consistency of a cryptographic function among plural program execution environments.

To solve the aforementioned problem, according to one aspect of the present invention, an image forming apparatus capable of executing a program in plural program execution environments includes a storage unit storing cryptographic data related to a cryptographic function; a first recording unit configured to obtain the cryptographic data from the storage unit and record the cryptographic data in a first storage area that can be referenced from the plural program execution environments; and plural second recording units provided in the plural program execution environments and configured to obtain the cryptographic data from the first storage area and record the cryptographic data in a second storage area for each of the plural program execution environments so that the cryptographic data can be referenced by the program executed in the plural program execution environments.

According to another aspect of the present invention, there is provided a data processing method executed by an image forming apparatus capable of executing a program in plural program execution environments. The processing method includes a first recording step of obtaining cryptographic data from a storage unit storing the cryptographic data related to a cryptographic function and recording the cryptographic data in a first storage area that can be referenced from the plural program execution environments; and plural second recording steps of obtaining the cryptographic data from the first storage area and recording the cryptographic data for each of the plural program execution environments in a second storage area so that the cryptographic data can be referenced by a program executed in the plural program execution environments.

According to another aspect of the present invention, there is provided a computer readable recording medium containing a computer program for causing an image forming apparatus capable of executing a program in plural program execution environments to execute the program. The computer program includes a first code for obtaining cryptographic data from a storage unit storing the cryptographic data related to a cryptographic function and recording the cryptographic data in a first storage area that can be referenced from the plural program execution environments; and plural second codes for obtaining the cryptographic data from the first storage area and recording the cryptographic data in a second storage area for each of the plural program execution environments so that the cryptographic data can be referenced by the program executed in the plural program execution environments.

### BRIEF DESCRIPTION OF THE DRAWINGS

FIG. 1 is a diagram showing a hardware configuration example of a multifunction peripheral of an embodiment of the present invention;
FIG. 2 is a diagram showing a software configuration example of a multifunction peripheral of an embodiment of the present invention;
FIG. 3 is a diagram for describing a structure for achieving consistency of cryptographic data;
FIG. 4 is a diagram for describing property values in a VM;
FIG. 5 is a schematic diagram showing a relationship between a VM environment and a native layer;
FIG. 6 is a diagram showing a software configuration example to realize a relationship among a shared memory, a cryptographic provider, and a data obtain library in an embodiment of the present invention;
FIG. 7 is a diagram showing an outline of a JCE;
FIG. 8 is a sequence diagram showing a process order to share data between a VM environment and a native layer;
FIG. 9 is a diagram showing an example of a cryptographic data setting display;
FIG. 10 is a diagram showing an example of a confirmation display;
FIG. 11 is a sequence diagram showing a process order to share data among VM environments;
FIG. 12 is a sequence diagram showing a process order to display a cryptographic data setting display by reflecting a country where a multifunction peripheral is located;
FIG. 13 is a diagram showing a structure for changing usable cryptographic strengths for each user in a multifunction peripheral of an embodiment of the present invention;
FIG. 14 is a sequence diagram showing a process order to change usable cryptographic strengths for each user; and
FIG. 15 is a diagram showing a structure for changing usable cryptographic strengths for each component in a multifunction peripheral of an embodiment of the present invention.

### DETAILED DESCRIPTION OF THE PREFERRED EMBODIMENTS

Hereinafter, an embodiment of the present invention is described with reference to the drawings. In this embodiment, a multifunction peripheral is taken as an example of the image forming apparatus. A multifunction peripheral 1 is an image forming apparatus which realizes plural functions of a printer, a copier, a scanner, a facsimile, and the like in one housing.

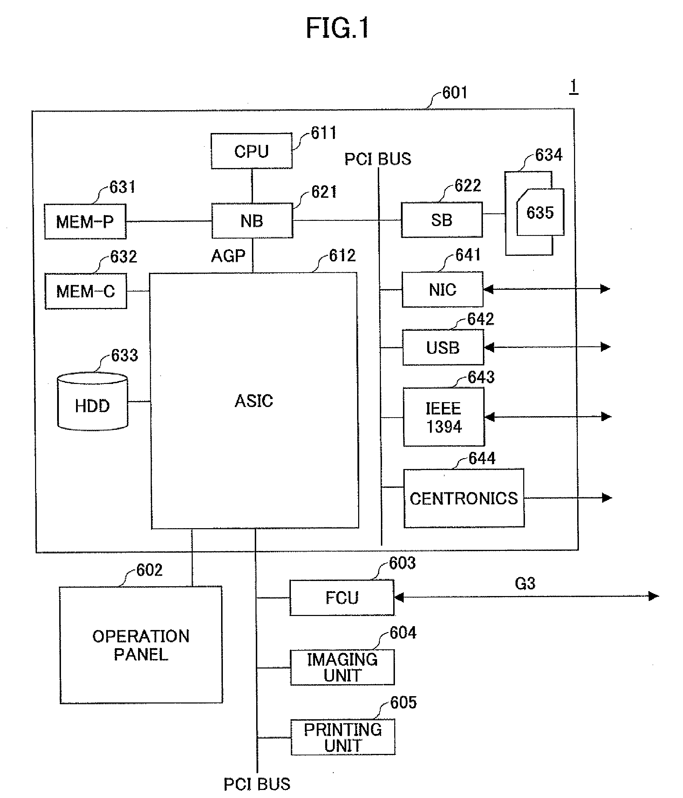

FIG. 1 shows a hardware configuration example of the multifunction peripheral of this embodiment. The hardware configuration of the multifunction peripheral 1 includes a controller 601, an operations panel 602, a facsimile control unit (FCU) 603, an imaging unit 604, and a printing unit 605.

The controller 601 includes a CPU 611, an ASIC 612, an NB 621, an SB 622, an MEM-P 631, an MEM-C 632, an HDD (Hard Disk Drive) 633, a memory card slot 634, an NIC (Network Interface Controller) 641, a USB device 642, an IEEE 1394 device 643, and a Centronics device 644.

The CPU 611 is an IC used for various data processes. The ASIC 612 is an IC used for various image processes. The NB 621 is a north bridge of the controller 601. The SB 622 is a south bridge of the controller 601. The MEM-P 631 is a system memory of the multifunction peripheral 1. The MEM-C 632 is a local memory of the multifunction peripheral 1. The HDD 633 is storage of the multifunction peripheral 1. The memory card slot 634 is a slot to receive a memory card 635. The NIC 641 is a controller used for network communications using MAC addresses. The USB device 642 is a device that provides a connection terminal of a USB standard. The IEEE 1394 device 643 is a device that provides a connection terminal of an IEEE 1394 standard. The Centronics device 644 is a device that provides a connection terminal of Centronics specification. The operations panel 602 serves as hardware (operating device) through which an operator inputs information into the multifunction peripheral 1 and also as hardware (display device) through which an operator obtains data from the multifunction peripheral 1.

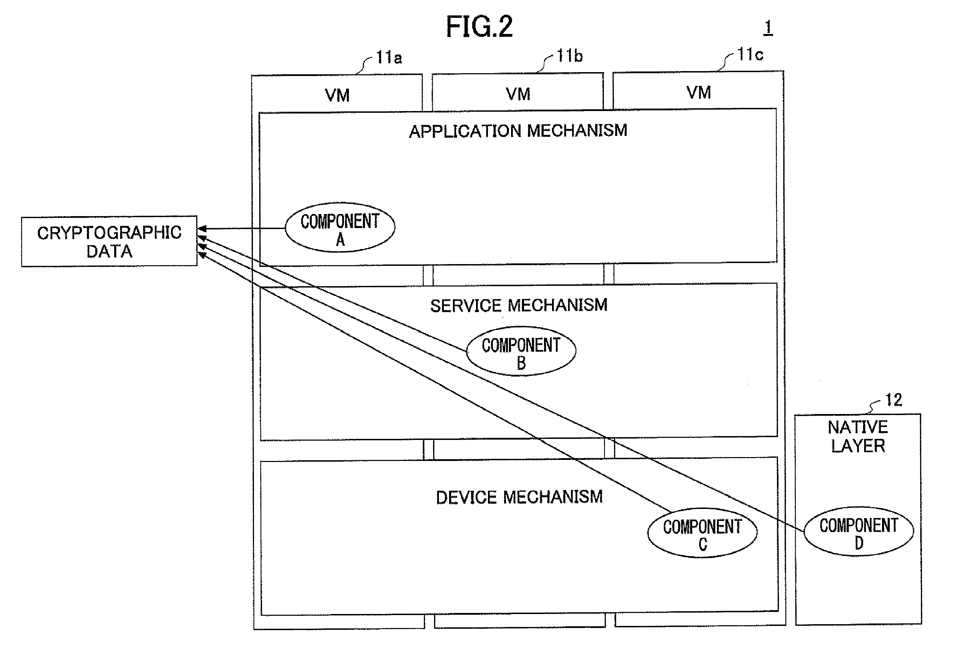

FIG. 2 shows a software configuration example of the multifunction peripheral of this embodiment. As shown in FIG. 2, the multifunction peripheral 1 has three Java (registered trademark) VMs (Virtual Machines), namely a VM 11a, a VM 11b, and a VM 11c (hereinafter referred to as a "VM 11" when collectively called). The VM 11 converts a program in a bytecode form which is unique to Java (registered trademark) into a Native code so that the CPU 611 executes the program.

Software components (hereinafter simply referred to as "components") operated in each VM 11 are logically categorized into layers of an application mechanism, a service mechanism, a device mechanism, and the like to be implemented. A component which basically executes a process to provide a service (for example, copying, printing, and the like) in a unit recognized by a user belongs to the application mechanism. A component which realizes a more primitive function (commonly) used by the plural components belonging to the application mechanism belongs to the service mechanism. A component which controls the hardware of the multifunction peripheral 1 belongs to the device mechanism.

Further, the multifunction peripheral 1 also includes a component as native code which is originally written in C language and the like and then converted through compiling and linking into machine language. In FIG. 2, a native layer 12 is provided as an environment to execute such a component.

In FIG. 2, a component A which is operated in the VM 11a belongs to the application mechanism. A component B which is operated in the VM 11b belongs to the service mechanism. A component C which is operated in the VM 11c and a component D which is operated in the native layer 12 belong to the device mechanism. It is not that each layer is determined to be managed by a specific VM 11; that is, a component belonging to any one of the application mechanism, the service mechanism, and the device mechanism may be executed on any of the VMs 11 and the native layer 12.

Each component shown in FIG. 2 references cryptographic data. The cryptographic data include a cryptographic method used for SSL (Secure Socket Layer) communications, a location (storage place) of a CA (Certificate Authority) certificate, a password to access the CA certificate, and the like. The components A, B, and C are executed in different VMs 11. The component D is in native code. That is, the components are executed in different program execution environments and process spaces. In these circumstances, consistency of cryptographic data is achieved throughout the program execution environments in the multifunction peripheral 1 of this embodiment.

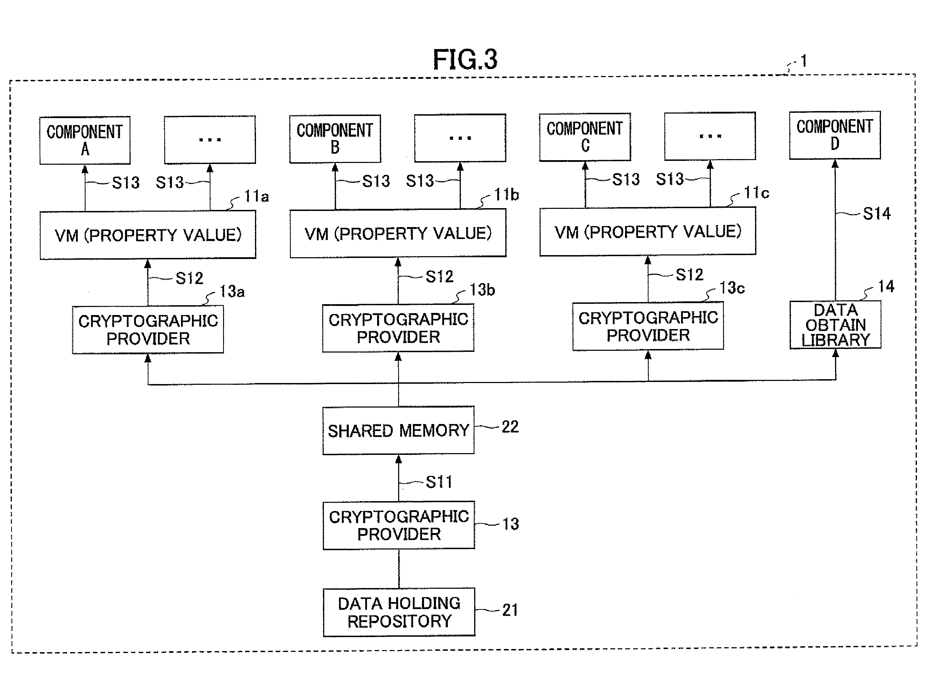

FIG. 3 shows a structure for achieving consistency of the cryptographic data. In a static state (where the multifunction peripheral 1 is not operated), the cryptographic data are stored (made persistent) in a data holding repository 21. The data holding repository 21 is a predetermined storage area of a nonvolatile memory medium such as the HDD 633. When the multifunction peripheral 1 is booted, cryptographic data of the data holding repository 21 are loaded into a shared memory 22 (S11). This loading is performed by any one of cryptographic providers 13a, 13b, and 13c which are described below (hereinafter referred to collectively as "cryptographic providers 13").

The shared memory 22 is a memory area (what is called a shared memory) that can be accessed (referenced and the like) by the program execution environments of VM 11a, VM 11b, VM 11c, and the native layer 12. The shared memory 22 is formed in the MEM-P 631. The cryptographic data loaded in the shared memory 22 are set as property values of each VM 11 by the cryptographic provider 13 serving as a program module programmed (plugged-in) in the corresponding VM 11 (S12).

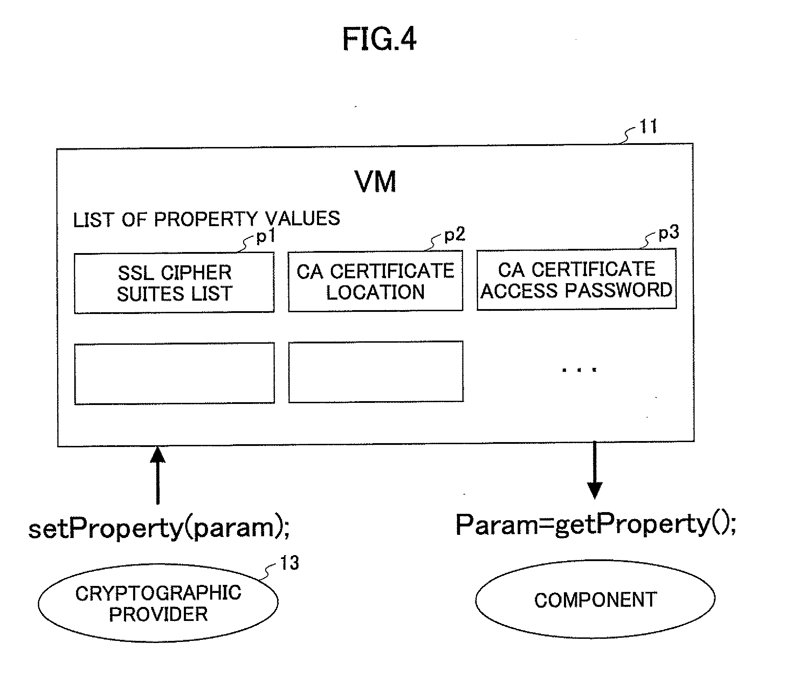

Here, the property values of the VM 11 are attribute values to define operational environments and the like in one VM in a Java standard system. The property values are stored in a memory so that a program executed in the VM can reference the property values. FIG. 4 is a diagram for describing the property values of the VM.

FIG. 4 shows an SSL cipher suites list p1, a CA certificate location p2, a CA certificate access password p3, and the like as property values for holding the cryptographic data. These values are Java standard property values.

The SSL cipher suites list p1 shows recommended values corresponding to a type of encryption (cryptographic strength) in performing the SSL (Secure Socket Layer) communications. The CA certificate location p2 shows a location where the CA certificate is stored. The CA certificate access password p3 shows a password required to access the CA certificate. Note that the property values can be set and obtained by a setProperty method or a getProperty method as Java standard methods.

Therefore, by using the setProperty method, the cryptographic provider 13 sets the three property values shown in FIG. 4 in the VM 11 to which the cryptographic provider 13 belongs. Each component which uses the cryptographic data obtains the property values by using the getProperty method (S13). Here, for example, the components A, B, and C obtain the property values set in the different VMs 11. Since the property values set in the VMs 11 come from the same shared memory 22, the same property values are referenced by the components. As a result, there is no inconsistency among the VMs 11.

On the other hand, a data obtain library 14 is implemented in the native layer 12, where the VM 11 is not provided. The data obtain library 14 includes an interface (function) to obtain cryptographic data set in the shared memory 22. For example, the component D in the native layer 12 obtains the cryptographic data through the data obtain library 14. As a result, consistency of the cryptographic data is achieved among the environments in VMs 11 (VM environments) and the native layer 12.

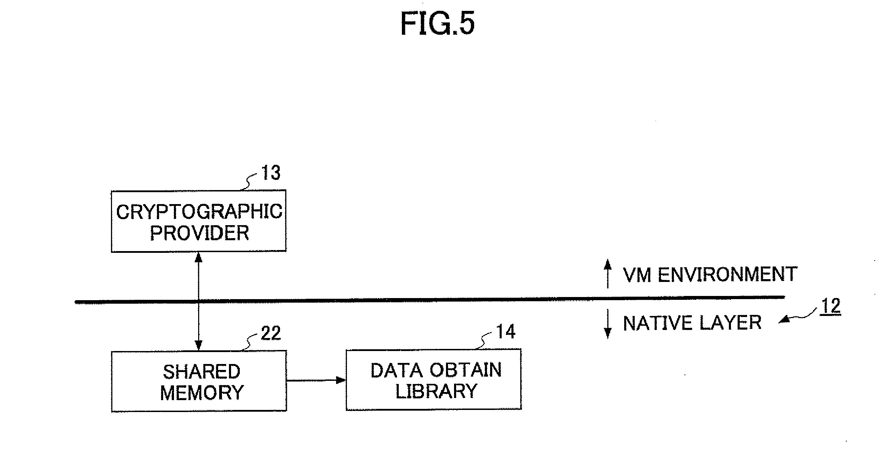

A relationship between the VM environment and the native layer 12 is more briefly described. FIG. 5 is a schematic diagram showing the relationship between the VM environment and the native layer 12.

As shown in FIG. 5, the cryptographic provider 13 in the VM environment registers cryptographic data into the shared memory 22, and at the same time, obtains the cryptographic data from the shared memory 22. Further, the data obtain library 14 in the native layer 12 obtains the cryptographic data registered by the cryptographic provider 13 from the shared memory 22.

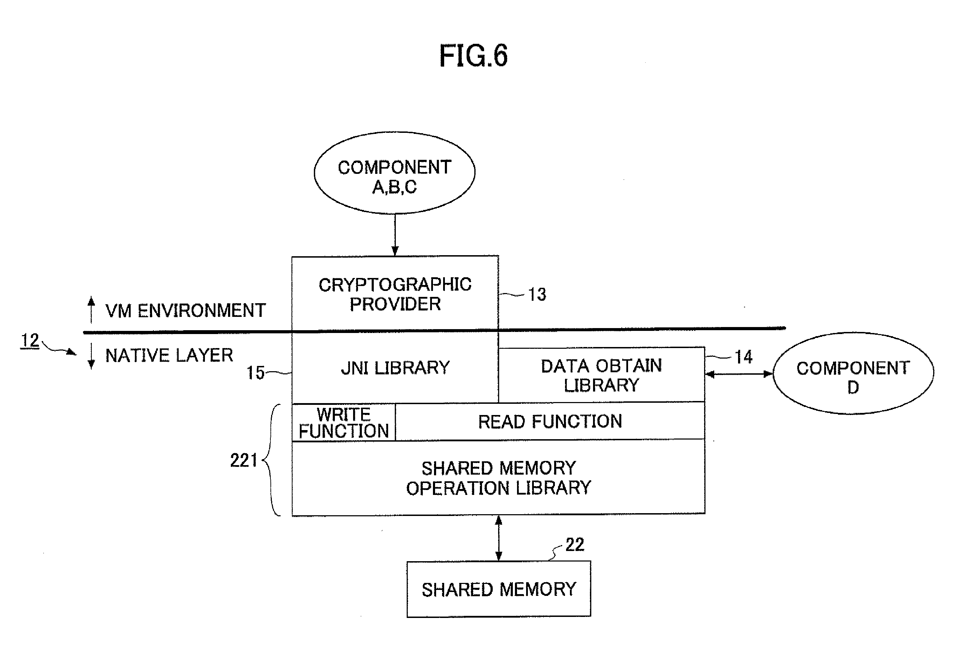

FIG. 6 is a diagram showing a software configuration example for realizing a relationship among the shared memory, the cryptographic provider, and the data obtain library of this embodiment.

The shared memory 22 is accessed through a shared memory operation library 221 in the native layer 12. The data obtain library 14 in the native layer 12 can directly use the shared memory operation library 221. The cryptographic provider 13 serving as a component of the VM environment, on the other hand, uses the shared memory operation library 221 through a JNI (Java Native Interface) library 15. The cryptographic provider 13 uses both a write function and a read function of the shared memory operation library 221. The data obtain library 14 uses only the read function of the shared memory operation library 221.

The cryptographic provider 13 is preferably implemented as a provider (plug-in) of the Java standard system. In this embodiment, the cryptographic provider 13 is implemented as a provider of a Java cryptographic extension (JCE (Java cryptography Extension)) function. The JCE function provides frameworks and implementations of encryption, generation of a key, and the like of the Java standard. A part of the implementations can be extended by the provider (JCE provider).

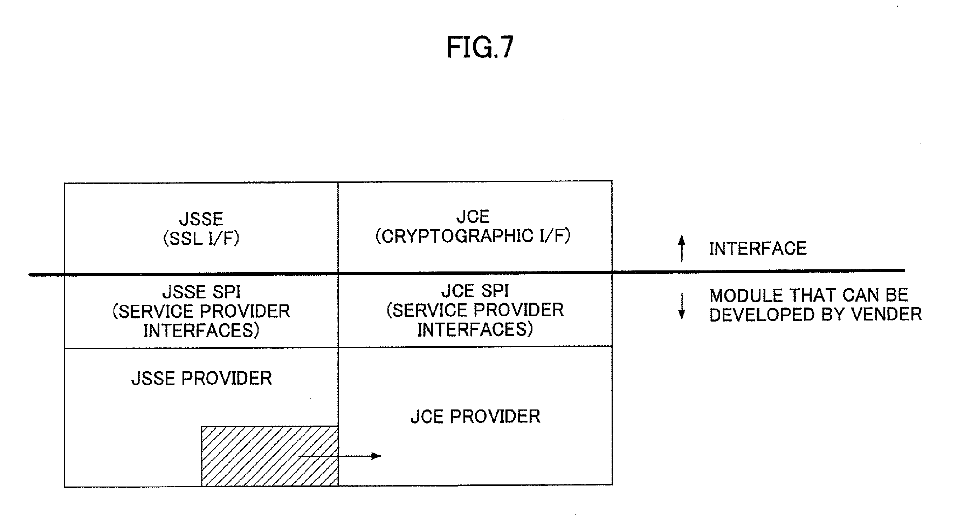

FIG. 7 is a diagram for describing an outline of the JCE. As shown in FIG. 7, the JCE provider is required to have implementation for an interface defined in a JCE SPI (Service Provider Interface). As a result, a request to use a service made through the interface of the JCE is sent to the JCE provider. As a result, implementation unique to the JCE provider is executed.

FIG. 7 also shows JSSE (Java Secure Socket Extension). The JSSE provides frameworks and implementations of SSL and the like of a Java version. A part of the implementations can be extended by a provider (JSSE provider).

In the JSSE provider, implementation of the JCE provider is used for a process such as encryption (shaded area). Therefore, by implementing the cryptographic provider 13 as the JCE provider, the cryptographic provider 13 can be called for a cryptographic process in the SSL communications.

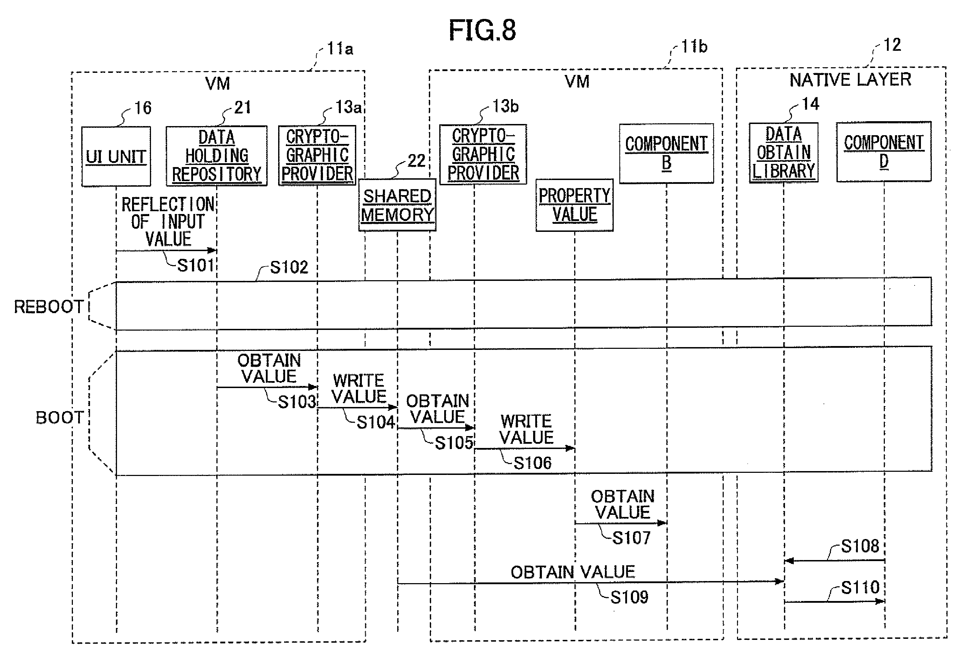

Hereinafter, a process order of the multifunction peripheral 1 is described. FIG. 8 is a sequence diagram for describing a process order to share data among the VM environments and the native layer. In FIG. 8, the VM 11c is omitted for convenience. The data holding repository 21 is included in a rectangle of the VM 11a, however, this does not mean that the data holding repository 21 is implemented on the VM 11a. The data holding repository 21 is independent of the program execution environments.

For example, when cryptographic data are inputted by an operator through a cryptographic data setting display shown on the operations panel 602, an UI unit 16 updates the cryptographic data stored in the data holding repository 21 by the inputted data (S101). Note that the UI unit 16 is a component for controlling the display shown on the operations panel 602 and the like in the multifunction peripheral 1. In the example of FIG. 8, the UI unit 16 is operated on the VM 11a.

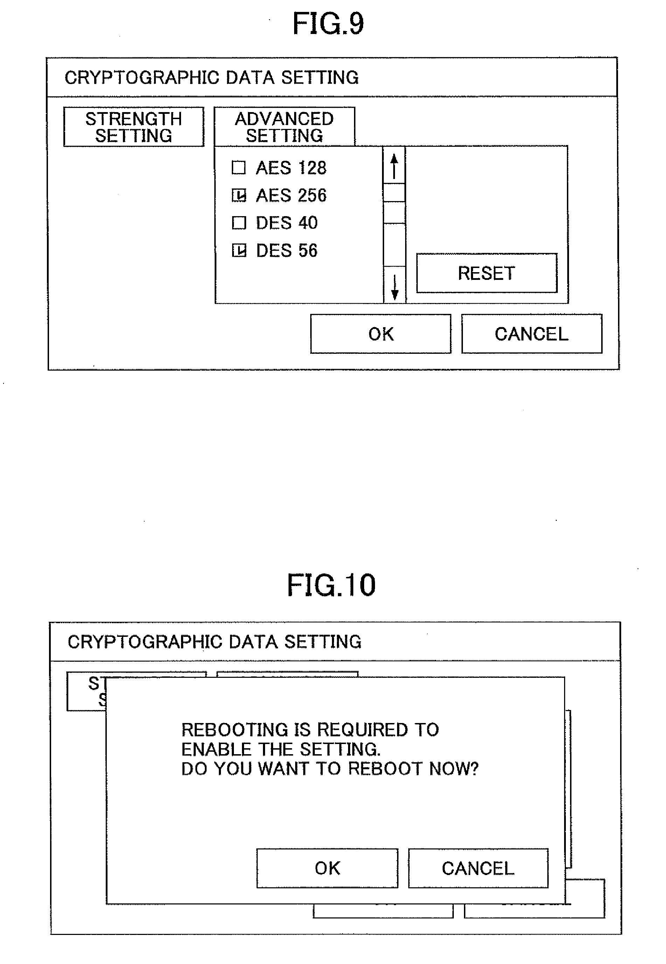

FIG. 9 shows an example of the cryptographic data setting display. In FIG. 9, there is shown an example of a display to allow the operator to select at least one cryptographic strength (cipher suites). When the cryptographic strength is selected and an "OK" button is pressed in the cryptographic data setting display, the UI unit 16 shows a confirmation display.

FIG. 10 shows an example of the confirmation display. This confirmation display shows a message asking whether a rebooting can be performed. When an "OK" button is pressed in the confirmation display, step S101 is executed.

Subsequently, the UI unit 16 reboots the multifunction peripheral 1 (S102). In this rebooting, the power of the multifunction peripheral 1 is not necessarily required to be turned off. For example, each VM 11 may be rebooted in a software manner. Alternatively, the rebooting may be performed manually by an operator.

For example, when a method related to the cryptographic function of the cryptographic provider 13a on the VM 11a is called by another component in the rebooting process, the cryptographic provider 13a obtains cryptographic data from the data holding repository 21 (S103) and writes the cryptographic data into the memory 22 (S104). Note that the method of the cryptographic provider 13a serving as the JCE provider is necessarily called in the booting process (in initialization).

Next, when a method related to a cryptographic function of the cryptographic provider 13b on the VM 11b is called by another component, the cryptographic provider 13b obtains the cryptographic data from the shared memory 22 (S105) and sets the cryptographic data as a property value (see FIG. 4) of the VM 11b (S106). After that, when the component B on the VM 11b performs an SSL communication and the like, the property value is referenced by an instance of a class for Java standard SSL communications and the like (S107).

When the component D in the native layer 12 performs a process related to encryption such as SSL communication, the component D obtains the cryptographic data written in the shared memory 22 by using the data obtain library 14 (S108 to S110).

As described above, consistency of the cryptographic strength to be used and the like is achieved between the components B and D.

In FIG. 8, the cryptographic provider 13a of the VM 11a writes the cryptographic data into the shared memory 22; however, the cryptographic provider 13 of the cryptographic function that is called first may write the cryptographic data. For example, when the cryptographic provider 13b is called first, the cryptographic provider 13b obtains the cryptographic data from the data holding repository 21 and writes the cryptographic data into the shared memory 22. Specifically, the cryptographic provider 13 whose method is called first checks the contents of the shared memory 22. When the cryptographic data have not been written in the shared memory 22, the cryptographic provider 13 registers the cryptographic data in the shared memory 22. When the cryptographic data have already been written in the shared memory 22, the cryptographic provider 13 obtains the cryptographic data from the shared memory 22.

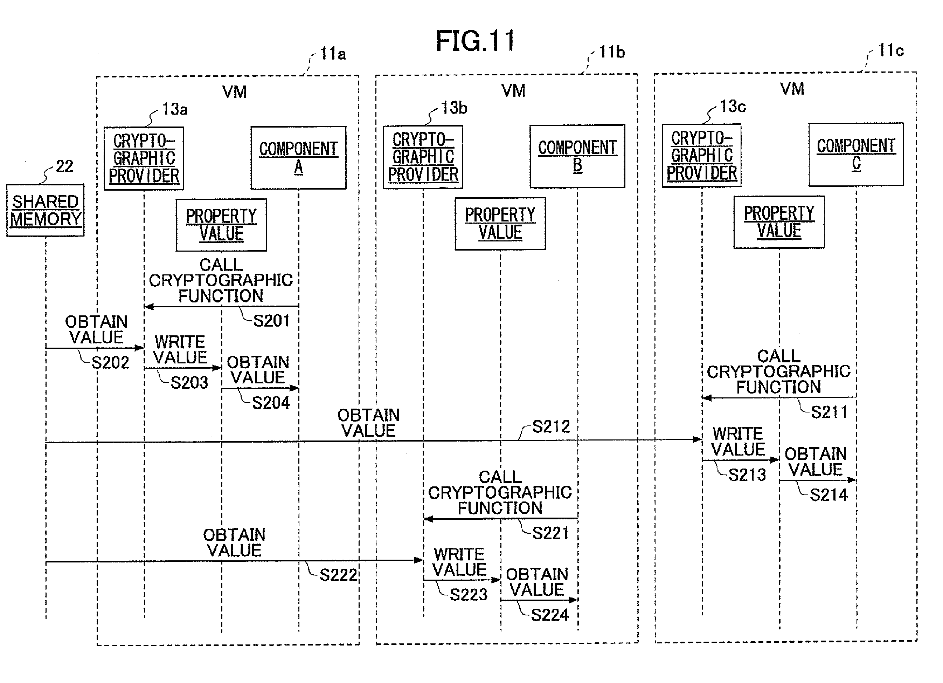

Data sharing among VMs 11, which is simplified in FIG. 8, is described. FIG. 11 is a sequence diagram for describing a process order to share data among VM environments. In FIG. 11, details of the process performed in the "booting" in FIG. 8 are shown. In FIG. 11, the cryptographic data have already been written into the shared memory 22 by any one of the cryptographic providers 13.

When a method related to the cryptographic function of the cryptographic provider 13a of the VM 11a is called by, for example, the component A in the rebooting process (S201), the cryptographic provider 13a obtains the cryptographic data from the shared memory 22 (S202) and sets the cryptographic data as a property value (see FIG. 4) of the VM 11a (S203). After that, when the component A performs SSL communications and the like, the property value is referenced by an instance of a class such as SSL communication of the Java standard (S204).

Subsequently, when a method related to the cryptographic function of the cryptographic provider 13c of the VM 11c is called by, for example, the component C (S211), the cryptographic provider 13c obtains the cryptographic data from the shared memory 22 (S212) and sets the cryptographic data as a property value (see FIG. 4) of the VM 11c (S213). After that, when the component C performs SSL communications and the like, the property value is referenced by an instance of a class such as SSL communication of the Java standard (S214).

Next, when a method related to a cryptographic function of the cryptographic provider 13b of the VM 11b is called by, for example, the component B (S221), the cryptographic provider 13b obtains the cryptographic data from the shared memory 22 (S222) and sets the cryptographic data as a property value (see FIG. 4) of the VM 11b (S223). After that, when the component B performs SSL communications and the like, the property value is referenced by an instance of a class such as SSL communications of the Java standard (S224).

On the cryptographic data setting display shown in FIG. 9, there is a list of the cryptographic strengths. The list of the cryptographic strengths basically usable in the multifunction peripheral 1 are set and shown on the cryptographic data setting display. The cryptographic strengths stored in the HDD 633 and the like are to be displayed. However, there is a problem in exporting techniques related to encryption to specific countries (export control). In view of this circumstance, the list of selectable cryptographic strengths may be dynamically changed depending on a place (country) where the multifunction peripheral 1 is located.

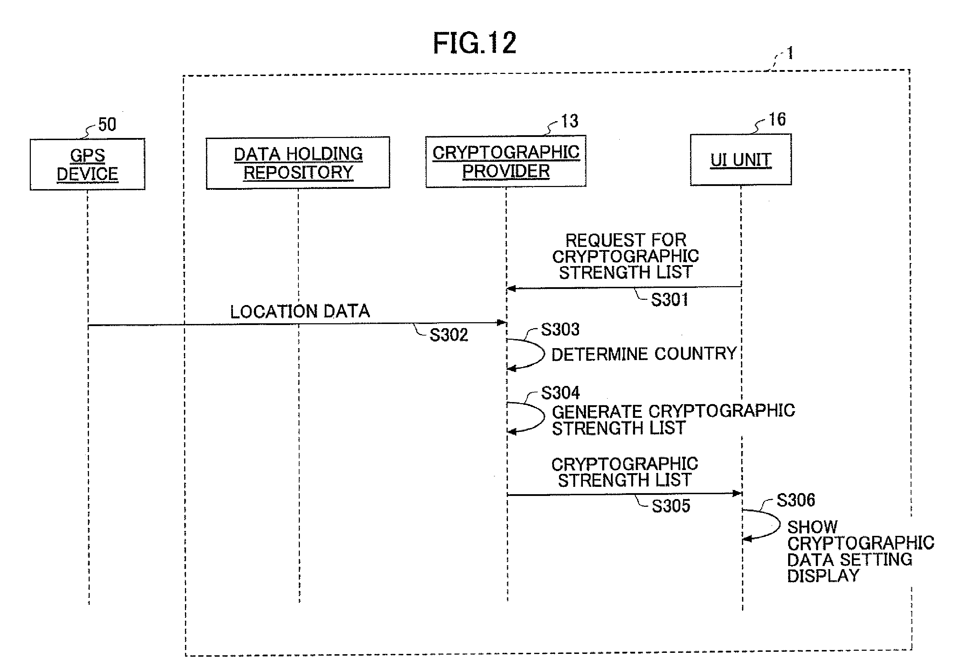

FIG. 12 shows a sequence diagram for describing a process order to display the cryptographic data setting display by reflecting a country where the multifunction peripheral 1 is located.

The UI unit 16 requests the cryptographic provider 13 on the same VM 11 as the UI unit 16 to provide the list of cryptographic strengths (S301) before displaying the cryptographic data setting display. For example, the cryptographic provider 13 obtains present location data of the multifunction peripheral 1 by a GPS (Global Positioning System) device 50 connected via USB to the multifunction peripheral 1 (S302). Then, the cryptographic provider 13 determines the country where the multifunction peripheral 1 is located, based on the location data (S303). The determination of the country by the location data may be performed by a known technique. Further, the location data obtained by the GPS device 50 may include country data.

Subsequently, the cryptographic provider 13 determines cryptographic strengths that can be exported to the determined country, and generates a list of the cryptographic strengths that are determined exportable (S304). However, when the GPS device 50 fails to obtain location data or the country cannot be determined, the cryptographic provider 13 does not generate a list of cryptographic strengths. Data of exportable cryptographic strengths (hereinafter called "export control data") of each country subject to export control may be registered in advance in the HDD 633, a ROM, or the like of the multifunction peripheral 1. Based on the export control data, the cryptographic provider 13 may determine the cryptographic strengths that can be exported to the country where the multifunction peripheral 1 is located.

Next, the cryptographic provider 13 returns the generated list of cryptographic strengths to the UI unit 16 (S305). The UI unit 16 displays the returned list of the cryptographic strengths on the cryptographic data setting display (S306). In this manner, selectable cryptographic strengths for the country of location are displayed. After that, when settings are made through the cryptographic data setting display, steps after S102 (rebooting of the multifunction peripheral 1) in FIG. 8 are executed. Note that the GPS device 50 may be incorporated in the multifunction peripheral 1.

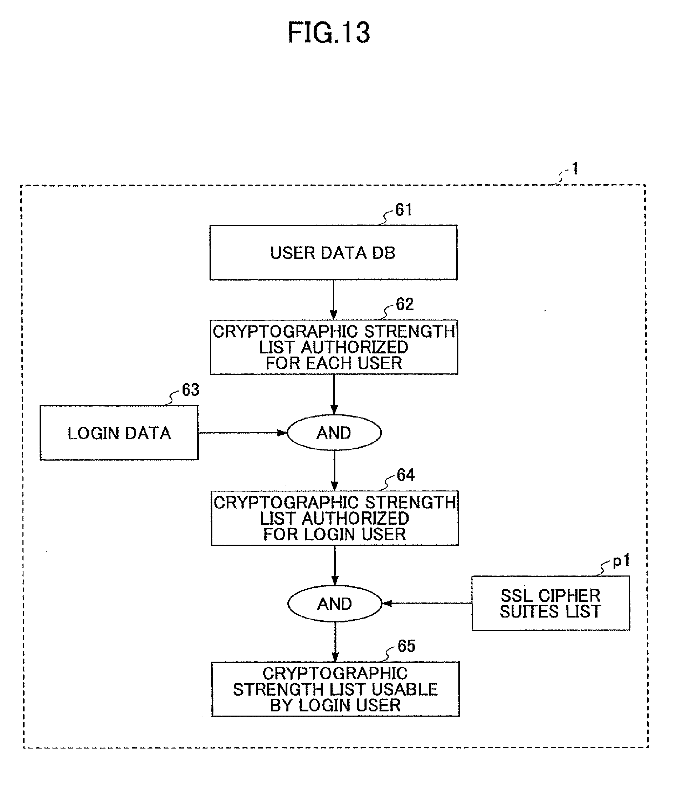

The cryptographic data set in the multifunction peripheral 1 are uniformly applied to subjects which use the cryptographic function, such as a user and a component. However, it is convenient in some cases if usable cryptographic strengths can be changed for each subject. Subsequently, an example of realizing this function is described. FIG. 13 is a diagram showing a structure for changing usable cryptographic strengths for each user in the multifunction peripheral of this embodiment.

First, cryptographic strength lists 62 authorized for each user (user name) to be used are registered in a user data DB 61 built in the HDD 633 of the multifunction peripheral 1 and the like. When the user logs in to the multifunction peripheral 1, a cryptographic strength list 64 of authorized strengths for the user who has logged in (login user) is extracted from the cryptographic strength lists 62 based on login data 63 (user name and the like) specified by an identification unit which is not shown. A list of cryptographic strengths resulting from logical multiplication of the extracted cryptographic strength list 64 and the SSL cipher suites list p1 as the property value of the VM 11 of the multifunction peripheral 1 is used as a cryptographic strength list 65 of strengths that can be used by the login user.

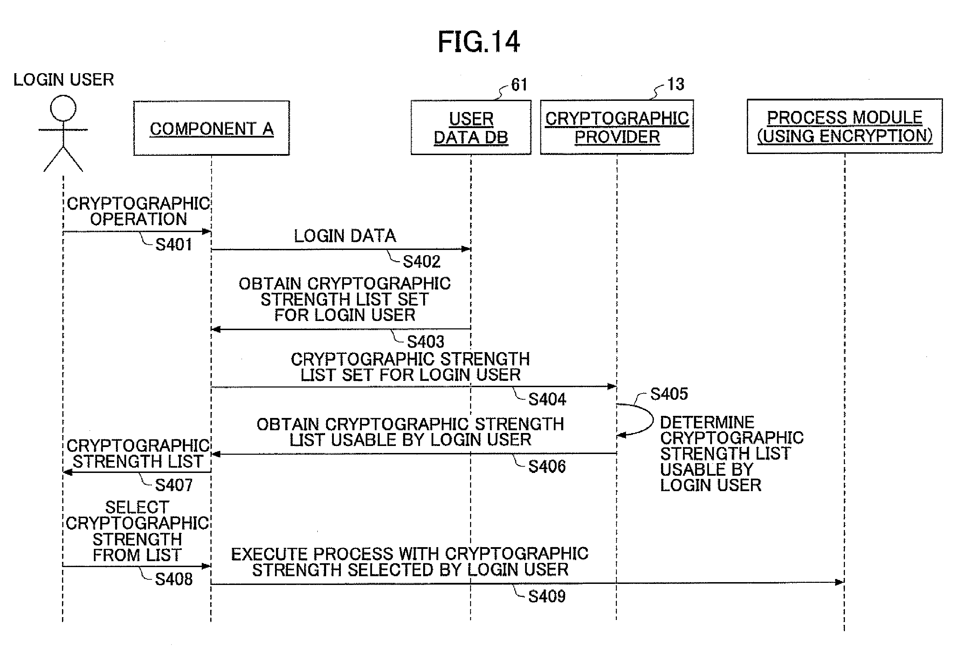

FIG. 14 is a sequence diagram for describing a process order to change the usable cryptographic strengths for each user. In FIG. 14, a user has already logged in to the multifunction peripheral 1.

For example, when the user who has logged in (login user) requests the component A for a process using a cryptographic function (S401), the component A obtains the cryptographic strength list 64 set for the login user from the cryptographic strength lists 62 for all users in the user data DB 61 based on the login data 63 (S402 and S403). Subsequently, the component A reports the obtained cryptographic strength list 64 to the cryptographic provider 13 (S404). The cryptographic provider 13 obtains logical multiplication of the reported cryptographic strength list 64 and the SSL cipher suites list p1. The cryptographic provider 13 then sets the logical multiplication results as the cryptographic strength list 65 that can be used by the login user (S405). Next, the cryptographic provider 13 returns the cryptographic strength list 65 to the component A (S406).

The component A reports the cryptographic strength list 65 to the login user by displaying the cryptographic strength list 65 on the operations panel 602 (S407). Accordingly, the login user can check the usable cryptographic strengths. When the login user selects the cryptographic strength to use (S408), the component A executes a cryptographic process based on the selected cryptographic strength (S409).

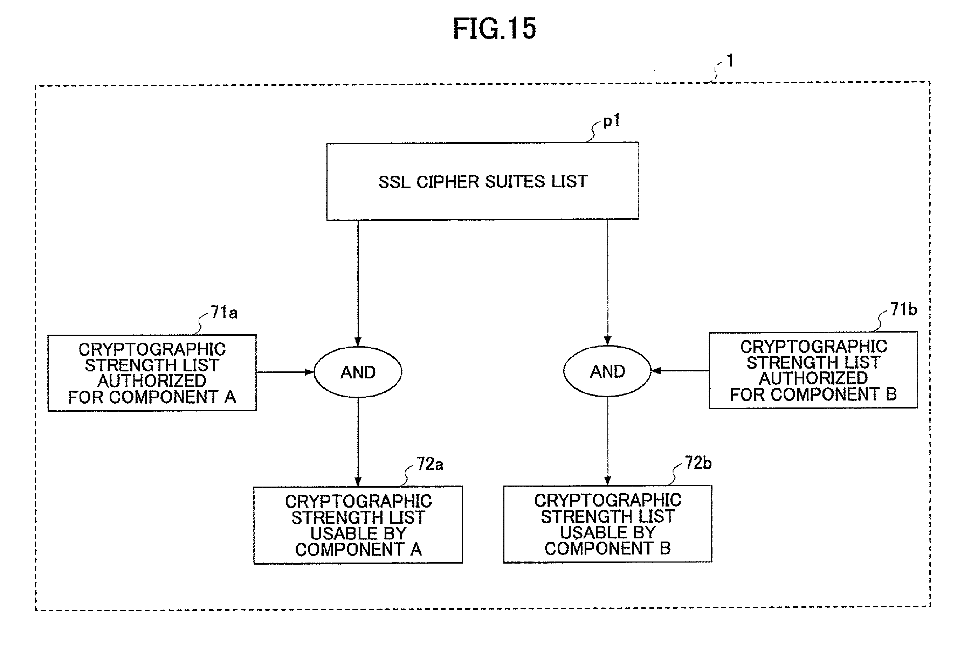

FIG. 15 is a diagram for describing a structure for changing usable cryptographic strengths for each component in the multifunction peripheral of this embodiment.

For the component A, for example, a logical multiplication of a cryptographic strength list 71a authorized for the component A and the SSL cipher suites list p1 is obtained and used as a cryptographic strength list 72a that can be used by the component A.

For the component B, similarly, a logical multiplication of a cryptographic strength list 71b authorized for the component B and the SSL cipher suites list p1 is obtained and used as a cryptographic strength list 72b that can be used by the component B.

Note that cryptographic strength lists authorized for each component may be registered in advance in the HDD 633 and the like of the multifunction peripheral 1. By these data, the cryptographic strength list 71a authorized for the component A and the cryptographic strength list 71b authorized for the component B are obtained.

A process order to realize this structure may be substantially similar to that of FIG. 14. When the component A is taken as an example, the cryptographic strength list 71a authorized for the component A is to be reported to the cryptographic provider 13 in step S404 instead of the cryptographic strength list 64 set for the login user.

Note that the structures shown in FIGS. 13 and 15 may be used in combination with the structure shown in FIG. 12. Specifically, a logical multiplication of the cryptographic strength list 65 shown in FIG. 13, the cryptographic strength list 72a, or 72b shown in FIG. 15, and a cryptographic strength list authorized for a determined country may be obtained, and a cryptographic strength list based on the logical multiplication may be used as a cryptographic strength list.

According to at least one embodiment, consistency of a cryptographic function among plural program execution environments can be appropriately achieved in an image forming apparatus of at least one embodiment of the present invention.

According to at least one embodiment, an image forming apparatus, a data processing method and a program can be provided, in which consistency of a cryptographic function among plural program execution environments can be appropriately achieved.

Although the present invention has been described with respect to a specific embodiment for a complete and clear disclosure, the appended claims are not to be thus limited but are to be construed as embodying all modifications and alternative constructions that may occur to one skilled in the art that fairly fall within the basic teachings herein set forth.

## Claims

1. An image forming apparatus capable of executing a program in plural program execution environments, said image forming apparatus **characterized by**:
a storage unit (21) storing cryptographic data related to a cryptographic function;
a first recording unit configured to obtain the cryptographic data from the storage unit and record the cryptographic data in a first storage area (22) that can be referenced from the plural program execution environments; and
plural second recording units provided in the plural program execution environments and configured to obtain the cryptographic data from the first storage area and record the cryptographic data in a second storage area for each of the plural program execution environments so that the cryptographic data can be referenced by the program executed in the plural program execution environments.

2. The image forming apparatus as claimed in claim 1, wherein the plural program execution environments are formed of plural virtual machine units for converting a code unique to a predetermined program language into a native code.

3. The image forming apparatus as claimed in claim 1, wherein the plural program execution environments are formed of a virtual machine unit for converting a code unique to a predetermined program language into a native code and a native code execution unit (12) for executing a program in the native code.

4. A data processing method executed by an image forming apparatus capable of executing a program in plural program execution environments, said data processing method **characterized by**:
a first step of obtaining cryptographic data from a storage unit (21) storing the cryptographic data related to a cryptographic function and recording the cryptographic data in a first storage area (22) that can be referenced from the plural program execution environments; and
plural second steps of obtaining the cryptographic data from the first storage area and recording the cryptographic data in a second storage area for each of the plural program execution environments so that the cryptographic data can be referenced by a program executed in the plural program execution environments.

5. The data processing method as claimed in claim 4, wherein the plural program execution environments are formed of plural virtual machine units for converting a code unique to a predetermined program language into a native code.

6. The data processing method as claimed in claim 4, wherein the plural program execution environments are formed of a virtual machine unit for converting a code unique to a predetermined program language into a native code and a native code execution unit (12) for executing a program in the native code.

7. A computer readable recording medium containing a computer program for causing an image forming apparatus capable of executing a program in plural program execution environments to execute the program, said computer program **characterized by**:
a first code for obtaining cryptographic data from a storage unit (21) storing the cryptographic data related to a cryptographic function and recording the cryptographic data in a first storage area (22) that can be referenced from the plural program execution environments; and
plural second codes for obtaining the cryptographic data from the first storage area and recording the cryptographic data in a second storage area for each of the plural program execution environments so that the cryptographic data can be referenced by the program executed in the plural program execution environments.

8. The computer readable recording medium as claimed in claim 7, wherein the plural program execution environments are formed of plural virtual machine units for converting a code unique to a predetermined program language into a native code.

9. The computer readable recording medium as claimed in claim 7, wherein the plural program execution environments are formed of a virtual machine unit for converting a code unique to a predetermined program language into a native code and a native code execution unit (12) for executing a program in the native code.
